# EUROPEAN PATENT APPLICATION

(11) **EP 2 868 740 A1**
(43) Date of publication of application: **06.05.2015**
(21) Application number: 13809130.1
(22) Date of filing: 28.06.2013
(51) Int. Cl.: C10M 161/00, F16C 33/66, C10M 133/16, C10M 139/00, C10M 145/14, C10N 10/04, C10N 30/06, C10N 40/04

(54) **LUBRICANT COMPOSITION**

(30) Priority: 29.06.2012 JP 2012147801
(71) Applicant: Idemitsu Kosan Co., Ltd, Tokyo 100-8321 (JP)
(72) Inventor: IWAI, Toshiaki, Chiba 299-0107 (JP); NARITA, Keiichi, Chiba 299-0107 (JP); TAKEKAWA, Daisuke, Chiba 299-0107 (JP)
(74) Representative: Hoffmann Eitle
(86) International application number: PCT/JP2013/067789
(87) International publication number: WO 2014/003162

(57) **Abstract**

A lubricating oil composition of the invention contains: a base oil; (A) at least one of a boron-containing bisalkyl succinimide and a boron-containing bisalkenyl succinimide; (B) an amide; and (C) a dispersed polymethacrylate.

## Description

### TECHNICAL FIELD

The present invention relates to a lubricating oil composition.

### BACKGROUND ART

An automatic transmission (AT) is a transmission having a mechanism in which a transmission torque ratio is automatically set according to a vehicle speed, a magnitude of load and the like. The automatic transmission includes a torque converter, gear mechanism, hydraulic mechanism, wet clutch and the like. Automatic transmission fluid (ATF) used for smoothly actuate the mechanisms of the automatic transmission is required to variously function as a power transmission medium, a lubricating medium of a bearing of a gear and a wet clutch, a heat medium for temperature adjustment, a lubricating medium of a friction material, a maintenance medium of an appropriate friction property of the friction material and the like in the torque converter, the hydraulic system and a control system. Particularly, a high kinetic friction coefficient (µd) is desired for preventing a delay in gear change while a high static friction coefficient (µs) is desired for preventing an engaged clutch from slipping.

For instance, Patent Literature 1 discloses a lubricating oil composition for an automatic transmission that contains a base oil having a viscosity in a specific range, a boronated imide compound, phosphite, and overbased calcium sulfonate. This composition provides advantages of a high static friction coefficient (µs) and an excellent transmission shock resistance (a µ ratio of 1 or less) (see paragraph [0022] [Advantages of the Invention]). Patent Literature 2 discloses a lubricating oil composition that contains a lubricating base oil, polyol compound, alkali metal borate, ashless dispersant and alkaline earth metal sulfonate. This composition can further enhance the kinetic friction coefficient (µd) and the static friction coefficient (µs) of the wet clutch (see paragraph [0073]

### [Advantages of the Invention]).

### CITATION LIST

### PATENT LITERATURE(S)

Patent Literature 1: JP Patent No. 3785378
Patent Literature 2: JP-A-2005-8695

### SUMMARY OF THE INVENTION

### PROBLEMS TO BE SOLVED BY THE INVENTION

In recent years, an automobile provided with a DCT (Dual Clutch Transmission) has begun to come on the market. In the DCT that is a kind of AT, dedicated clutches are respectively prepared in an odd-numbered stage and an even-numbered stage. Since gears in a next stage are engaged in advance at gear change, gear change can be quickly done just by switching the clutches. Moreover, since a driving force is transmitted by a spur gear in the same manner as in a manual transmission (MT), the DCT provides a higher transmission efficiency than the AT using a conventional planet gear. Although the DCT has excellent characteristics as described above, the DCT requires a lubricating oil to have a high dynamic friction coefficient and a high gear protection property (wear resistance).

However, a lubricating oil suitable for the DCT has not been provided yet. Even the above lubricating oils disclosed in Patent Literatures 1 and 2 are difficult to sufficiently satisfy both of a high dynamic friction coefficient and a high wear resistance.

An object of the invention is to provide a lubricating oil composition having a high dynamic friction coefficient and an excellent wear resistance, particularly suitable for a DCT.

### MEANS FOR SOLVING THE PROBLEMS

The inventors found that a dynamic friction coefficient and a wear resistance are improvable by changing a type of PMA (polymethacrylate), which is known as a viscosity index improver, from a typical non-dispersed type to a dispersed type, and by further using a boron-containing bisimide and an amide. The inventors achieved the invention based on the above findings.

Specifically, the invention provides the following lubricating oil composition for a transmission.

(1) A lubricating oil composition in an aspect of the invention contains: a base oil; (A) at least one of a boron-containing bisalkyl succinimide and a boron-containing bisalkenyl succinimide; (B) an amide; and (C) a dispersed polymethacrylate.
(2) The lubricating oil composition in the above aspect of the invention further contains at least one additive selected from the group consisting of an antiwear agent and an extreme pressure agent, in which the additive contains at least one element selected from the group consisting of sulfur and phosphorus.
(3) The lubricating oil composition in the above aspect of the invention further contains a metal detergent having at least one element selected from the group consisting of calcium, magnesium and zinc.
(4) The lubricating oil composition in the above aspect of the invention further contains a friction modifier having an extreme pressure property.
(5) In the lubricating oil composition in the above aspect of the invention, the lubricating oil composition is used for a transmission.
(6) In the lubricating oil composition in the above aspect of the invention, the lubricating oil composition is used for an automatic transmission.
(7) In the lubricating oil composition in the above aspect of the invention, the lubricating oil composition is used for a DCT (Dual Clutch Transmission).

The invention can provide a lubricating oil composition having a high dynamic friction coefficient and an excellent wear resistance, particularly suitable for a DCT.

### DESCRIPTION OF EMBODIMENT(S)

A lubricating oil composition according to an exemplary embodiment (hereinafter, simply also called as the "present composition") is provided by blending with a base oil (A) at least one of a boron-containing bisalkyl succinimide and a boron-containing bisalkenyl succinimide, (B) an amide, and (C) a dispersed polymethacrylate. The present composition will be described below in detail.

### Base Oil

The base oil of the present composition is not particularly limited, but preferably has a kinematic viscosity at 40 degrees C in a range of 0.5 mm²/s to 40 mm²/s, more preferably in a range of approximately 10 mm²/s to 35 mm²/s. When the kinematic viscosity at 40 degrees C is less than 0.5 mm²/s, lubricity is insufficient. When the kinematic viscosity at 40 degrees C exceeds 40 mm²/s, an energy-saving performance is poor.

The base oil may be a mineral oil or a synthetic base oil. A type of the base oil is not particularly limited but may be suitably selected from any mineral oil and synthetic oil that have been conventionally used as a base oil of the lubricating oil for a transmission.

Examples of the mineral oil include a paraffinic mineral oil, intermediate mineral oil and naphthenic mineral oil. Examples of the synthetic oil are polyalphaolefin (PAO), polybutene, polyol ester, diacid ester, phosphate ester, polyphenyl ether, polyglycol, alkylbenzene and alkylnaphthalene. Examples of the above PAO are an α-olefin homopolymer and an α-olefin copolymer. One of the base oils may be used alone or a combination of two or more thereof may be used.

Among the above mineral oils, kerosene and a light oil are suitably usable as low viscous mineral oils.

A kinematic viscosity at 100 degrees C of the present composition is preferably in a range of 0.5 mm²/s to 10 mm²/s.

When the kinematic viscosity at 100 degrees C of the present composition is less than 0.5 mm²/s, lubricity may be insufficient. On the other hand, when the kinematic viscosity at 100 degrees C of the present composition exceeds 10 mm²/s, an energy-saving performance may be lowered. Accordingly, the kinematic viscosity at 100 degrees C of the present composition is more preferably in a range of 3 mm²/s to 9 mm²/s, further preferably in a range of 5 mm²/s to 8 mm²/s.

### Component (A)

A component (A) of the present composition is at least one of a boron-containing bisalkyl succinimide and a boron-containing bisalkenyl succinimide. A boronation process will be described later. Succinimide containing no boron preferably has a structure represented by a formula (1) below.

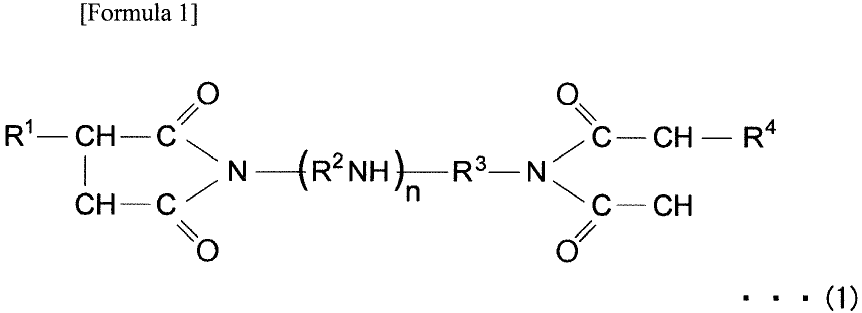

In the formula, R¹ and R⁴ each are an alkyl group or an alkenyl group having a number average molecular weight preferably in a range of 1×10³ to 3.5×10³, particularly preferably in a range of 1×10³ to 2.5×10³. R¹ and R⁴ may be mutually the same or different. When the number average molecular weight of the alkyl group or the alkenyl group in such a substituted succinimide is in a range of 1×10³ to 3.5×10³, the advantages of the invention can be exhibited more appreciably. A particularly preferable substituent is a polybutenyl group.

Moreover, each of R² and R³ is preferably an alkylene group having 2 to 4 carbon atoms. The alkylene groups may be mutually the same or different. n is an integer, preferably, from 0 to 10.

Among such a substituted succinimide, bispolybutenyl succinimide can be manufactured, for instance, by reacting polybutenyl succinic anhydride, which is obtained by reacting polybutene with maleic anhydride, with polyalkylene polyamine. Specifically, bispolybutenyl succinimide can be obtained with monopolybutenyl succinimide by changing a reaction ratio of the polybutenyl succinic anhydride and polyalkylene polyamine.

Examples of polyalkylene polyamine to be used herein are polyethylene polyamine, polypropylene polyamine, and polybutylene polyamine, among which polyethylene polyamine is preferable.

In order to obtain a boron-containing bispolybutenyl succinimide from the above-described bispolybutenyl succinimide containing no boron, it is only necessary to react the bispolybutenyl succinimide containing no boron with a boron compound. Examples of the boron compound are boracic acid, boric anhydride, boron halogenide, borate ester, borate amide and boric oxide. Without special limitations, any known methods of reacting may be used. For instance, in order to manufacture the boron-containing succinimide, an organic solvent such as alcohols, hexane or xylene is added with polyamine, polybutenyl succinic acid (anhydride) and a boron compound such as boracic acid, and is subsequently heated under suitable conditions.

In the exemplary embodiment, a content of the component (A) is preferably in a range of 100 mass ppm to 500 mass ppm in terms of a nitrogen content based on a total amount of the composition, more preferably in a range of 150 mass ppm to 350 mass ppm. The content of the component (A) is in a range of 50 mass ppm to 300 mass ppm in terms of a boron content, more preferably in a range of 100 mass ppm to 200 mass ppm.

When the nitrogen content is less than 100 mass ppm, the dynamic friction coefficient may be decreased or dispersibility of a degraded substance may be deteriorated. On the other hand, when the nitrogen content exceeds 500 mass ppm or the boron content exceeds 300 mass ppm, transmission shock or shudder is likely to be caused.

### Component (B)

A component (B) of the present composition is an amide. The amide is preferably an aliphatic carboxylic acid amide. The amide as the component (B) preferably has an alkyl group. The alkyl group preferably has 12 to 20 carbon atoms in terms of the dynamic friction coefficient. Examples of the component (B) are stearic acid amide, isostearic acid amide, lauric acid amide, myristic acid amide and palmitic acid amide. One of the components (B) may be used alone or a combination of two or more thereof may be used.

A content of the component (B) is not particularly limited, but preferably in a range of 0.1 mass% to 5 mass% of the total amount of the composition, more preferably in a range of 0.5 mass% to 3 mass%. When the content of the component (B) is excessively small, the dynamic friction coefficient at a low speed tends to be excessively high. On the other hand, when the content of the component (B) is excessively large, an undissolved substance is likely to be generated, whereby effects may not always be obtained proportionally to the content of the component (B).

### Component (C)

A component (C) of the present composition is a dispersed polymethacrylate (PMA). When a non-dispersed polymethacrylate is used as the component (C), the component (C) exhibits a low dynamic friction coefficient and a poor wear resistance. A number average molecular weight of the non-dispersed polymethacrylate is preferably in a range of 5×10³ to 3×10⁵, more preferably in a range of 1×10⁴ to 2×10⁵, particularly preferably in a range of 2×10⁴ to 1×10⁵. One of the dispersed polymethacrylate may be used alone or a combination of two or more thereof may be used. A content of the component (C) is not particularly limited, but preferably in a range of 5 mass% to 20 mass% of the total amount of the composition, more preferably in a range of 10 mass% to 15 mass%.

The present composition is provided by blending the above-described components (A), (B) and (C) with the base oil. With this arrangement, a lubricating oil composition having a high dynamic friction coefficient and an excellent wear resistance can be provided. Accordingly, the lubricating oil composition is suitable for an automatic transmission, particularly for a DCT.

### Other Additives

The present composition preferably further contains at least one additive selected from an antiwear agent and an extreme pressure agent. The additive particularly preferably contains at least one element of sulfur and phosphorus.

Specific examples of the additive are: sulfur-containing antiwear agents such as zinc dithiophosphate (ZnDTP), zinc dithiocarbamate (ZnDTC), disulfides, sulfurized olefins, sulfurized fats and oils, sulfurized esters, thiocarbonates and thiocarbamates; phosphorus-containing antiwear agents such as phosphite esters, phosphate esters, phosphonate esters and amine salts or metal salts thereof; and a sulfur and phosphorus-containing antiwear agents such as thiophosphite esters, thiophosphate esters, thiophosphonate esters, sulfurized oxymolybdenum organophosphorodithioate (MoDTP), sulfurized oxymolybdenum dithiocarbamate (MoDTC) and amine salts or metal salts thereof. One of the additives may be used alone or a combination of two or more thereof may be used.

A content of the additive is preferably in a range of approximately 0.01 mass% to 5 mass% based on the total amount of the composition.

The present composition preferably further contains a metal detergent having at least one element of calcium, magnesium and zinc.

Specifically, examples of the metal detergent are neutral or overbased sulfonate, phenate, salicylate, carboxylate and phosphonate containing the above metal(s). Among the examples of the metal detergent, Ca sulfonate, Ca salicylate, and Ca phenate are preferable. Particularly, overbased (i.e., having a base number in a range of 150 mgKOH/g to 500 mgKOH/g according to a perchloric acid method) Ca sulfonate, Ca salicylate, and Ca phenate are preferable.

A content of the metal detergent is preferably in a range of 0.01 mass% to 2 mass% in terms of a metal element content.

The present composition preferably further contains a friction modifier having extreme pressure property. Examples of the friction modifier are aliphatic unsaturated monocarboxylic acid (e.g., oleic acid), polymerized fatty acid (e.g., dimer acid and hydrogenated dimer acid), hydroxyl fatty acid (e.g., ricinoleic acid and 12-hydroxystearic acid), aliphatic unsaturated monoalcohol (oleyl alcohol) and aliphatic unsaturated monoamine (e.g., oleyl amine).

A content of the friction modifier is preferably in a range of approximately 0.01 mass% to 10 mass% based on the total amount of the composition.

The present composition may further contain an antioxidant, rust inhibitor, metal deactivator and antifoaming agent as needed.

Examples of the antioxidant are: an amine antioxidant such as alkylated diphenylamine, phenyl-α-naphthylamine, alkylated phenyl-α-naphthylamine; a phenolic antioxidant such as 2,6-di-t-butylphenol, 4,4'-methylenebis(2,6-di-t-butylphenol), isooctyl-3-(3,5-di-t-butyl-4-hydroxyphenyl)propionate, and n-octadecyl-3-(3,5-di-t-butyl-4-hydroxyphenyl)propionate; a sulfur antioxidant such as dilauryl-3,3'-thiodipropionate; a phosphorous antioxidant such as phosphite, and a molybdenum antioxidant. One of the antioxidants may be used alone or a combination of a plurality thereof may be used. However, a combination of two or more thereof is preferable. A content of the antioxidant is preferably in a range of approximately 0.01 mass% to 5 mass% based on the total amount of the composition.

Examples of the rust inhibitor are petroleum sulfonate, alkylbenzene sulfonate, dinonylnaphthalene sulfonate, alkenyl succinic ester, and polyhydric alcohol ester. In view of blending effects, a content of the rust inhibitor is preferably in a range of approximately 0.01 mass% to 1 mass% based on the total amount of the composition.

Examples of the metal deactivator are a benzotriazole compound, tolyltriazole compound, thiadiazole compound, and imidazole compound. In view of blending effects, a content of the metal deactivator is preferably in a range of approximately 0.01 mass% to 1 mass% based on the total amount of the composition.

Examples of the antifoaming agent are silicone, fluorosilicone, and fluoroalkylether. In view of a balance between antifoaming effects and cost and the like, a content of the antifoaming agent is preferably in a range of approximately 0.005 mass% to 0.1 mass% based on the total amount of the composition.

### Examples

Next, the invention will be further described in detail by reference to Examples, which by no means limits the invention.

### Examples 1, 2 and Comparative 1

Lubricating oil compositions having blend compositions shown in Table 1 were prepared, and a dynamic friction coefficient (µd) and a wear resistance of each of the compositions were evaluated.

The components used for preparing the lubricating oil compositions are as follows.

(1) Lubricating base oil: API classification group III, having 30 mm²/s of a kinematic viscosity at 40 degrees C
(2) Boron bisimide: a boron-containing bispolybutenyl succinimide having a polybutenyl group having a number average molecular weight of 950
(3) Boron monoimide: a boron-containing polybutenyl succinimide having a polybutenyl group having a number average molecular weight of 950
(4) Amide: an aliphatic carboxylic acid amide-based friction modifier
(5) Dispersed PMA: a number average molecular weight of 3×10⁴
(6) Non-dispersed PMA: a number average molecular weight of 3×10⁴
(7) Other Additives: a package additive of a phosphorous and sulfur extreme pressure agent, amine antioxidant and friction modifier

The dynamic friction coefficient and wear resistance of each of the lubricating oil compositions were evaluated as follows. The evaluation results are shown in Table 1.

### Dynamic Friction Coefficient (µd)

A dynamic friction coefficient (µd: a µ value at 1200 rpm) was measured in a dynamic operation under the following test conditions using an SAE No. 2 friction tester.
Friction Material: commercially available cellulose friction plate or steel plate
Test Temperature: 100 degrees C
Face Pressure: 0.785 MPa
Dynamic Rotation Speed: 3600 rpm
Static Rotation Speed: 0.7 rpm
Inertia: 0.343kg·m²

### Wear Resistance Test (FZG Scoring Resistance Test)

A load was increased in stages according to the stipulation of DIN 51354-2 using an FZG gear tester. A stage of the load in which scoring was caused was displayed (at a measurement temperature of 90 degrees C).

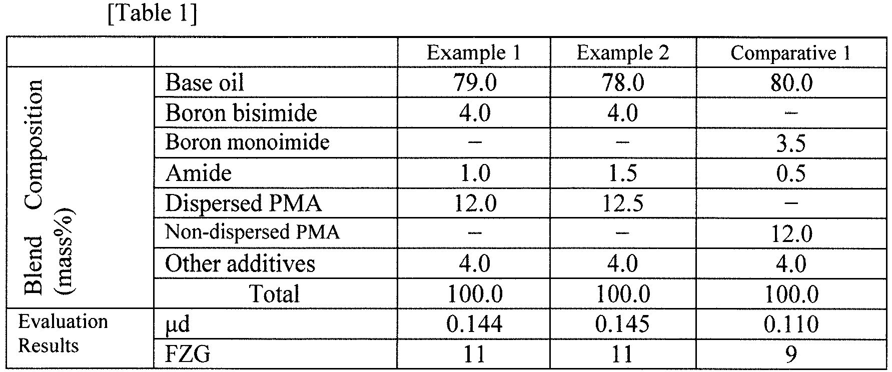

### Evaluation Results

As understandable from the evaluation results of Table 1, in Examples 1 and 2 in which the lubricating oil composition of the invention was used, since all the requisite components (A), (B) and (C) of the invention are contained, the dynamic friction coefficient (µd) is high and the wear resistance is excellent. In contrast, in Comparative 1 in which these requisite components are not contained, µd is low and the wear resistance is poor.

### INDUSTRIAL APPLICABILITY

A lubricating oil composition of the invention is suitable as a transmission oil particularly for a DCT (Dual Clutch Transmission).

## Claims

1. A lubricating oil composition comprising:
a base oil;
(A) at least one of a boron-containing bisalkyl succinimide and a boron-containing bisalkenyl succinimide;
(B) an amide; and
(C) a dispersed polymethacrylate.

2. The lubricating oil composition according to claim 1, further comprising:
at least one additive selected from the group consisting of an antiwear agent and an extreme pressure agent, wherein
the additive contains at least one element selected from the group consisting of sulfur and phosphorus.

3. The lubricating oil composition according to claim 1 or 2, further comprising:
a metal detergent having at least one element selected from the group consisting of calcium, magnesium and zinc.

4. The lubricating oil composition according to any one of claims 1 to 3, further comprising:
a friction modifier having an extreme pressure property.

5. The lubricating oil composition according to any one of claims 1 to 4, wherein the lubricating oil composition is used for a transmission.

6. The lubricating oil composition according to claim 5, wherein the lubricating oil composition is used for an automatic transmission.

7. The lubricating oil composition according to claim 6, wherein the lubricating oil composition is used for a DCT (Dual Clutch Transmission).
